# EUROPÄISCHE PATENTANMELDUNG

(11) **EP 0 897 227 A2**
(43) Veröffentlichungstag der Anmeldung: **17.02.1999**
(21) Anmeldenummer: 98112689.9
(22) Anmeldetag: 09.07.1998
(51) Int. Cl.: H04J 14/02

(54) **Verfahren und Anordnung zur Wellenlängenstabilisierung für mehrkanalige optische Übertragungssysteme**

(30) Priorität: 13.08.1997 DE 19734957
(71) Anmelder: Lucent Technologies Network Systems GmbH, 90411 Nürnberg (DE)
(72) Erfinder: Berger, Matthias, Dipl.-Ing., 90559 Burgthann (DE); Möller, Lothar, Dr.sc.techn., 52078 Aachen (DE)
(74) Vertreter: Blumbach, Kramer & Partner GbR

(57) **Zusammenfassung**

Die Erfindung betrifft ein Verfahren und eine Einrichtung zur Wellenlängenstabilisierung für mehrkanalige optische Übertragungssysteme.

In mehrkanaligen optischen Übertragungssystemen (WDM-Systeme) ist gegenwärtig ein Trend hin zu immer höheren Kanalzahlen erkennbar, wodurch sich die Kanalabstände zwischen den einzelnen Trägersignalen verringern. Wegen der Verringerung der Kanalabstände ergeben sich höhere Anforderungen an die Wellenlängenstabilität der einzelnen Trägersignale.

Bekannte Verfahren und Anordnungen zur Wellenlängenstabilisierung verwenden aufwendige optische Komponenten wie Frequenzdiskriminatoren oder Referenzlaser.

Bei der vorliegenden Erfindung wird statt dessen direkt deroptische Multiplexer für die Erzeugung des optischen Gesamtsignals verwendet. Dies ermöglicht eine einfache elektronische Regelung der Wellenlängen der optischen Trägersignale mittels einer Auswertung der Amplitudenwerte von niederfrequenten Signalen, die den optischen Trägersignalen mittels Amplitudenmodulation aufmoduliert werden.

## Beschreibung

Die Erfindung betrifft ein Verfahren und eine Einrichtung zur Wellenlängenstabilisierung für mehrkanalige optische Übertragungssysteme, bei denen für jeden Kanal ein Sender mit einer Laserlichtquelle vorhanden ist, die ein optisches Trägersignal mit einer für den jeweiligen Kanal vorgegebenen Wellenlänge erzeugt.

In mehrkanaligen optischen Übertragungssystemen (WDM-Systeme) ist gegenwärtig ein Trend hin zu immer höheren Kanalzahlen erkennbar. Da die zur Signalübertragung verwendeten optischen Fasern und Verstärker nur gute Übertragungseigenschaften für optische Signale aufweisen, die eine bestimmte Wellenlänge haben bzw. innerhalb eines gewissen Wellenlängenbereichs liegen, verringern sich die Kanalabstände zwischen den einzelnen Trägersignalen in dem Maß, in dem sich die Kanalzahl erhöht. Wegen der Verringerung der Kanalabstände ergeben sich höhere Anforderungen an die Wellenlängenstabilität der einzelnen Trägersignale bzw. die sie erzeugenden Laserlichtquellen.

Um Änderungen der Wellenlänge der Trägersignale aufgrund von Umgebungstemperaturschwankungen oder der Alterung der Laserlichtquelle zu kompensieren, sind verschiedene Wellenlängen- bzw. Frequenzregelungen bekannt geworden.

Aus dem Aufsatz "16-CHANNEL OPTICAL FDM DISTRIBUTION/TRANSMISSION EXPERIMENT UTILISING MULTICHANNEL FREQUENZY STABILISER AND WAVEGUIDE FREQUENCY SELECTION SWITCH" von H. Toba et al, erschienen in ELECTRONICS LETTERS, 27^{th} April 1989, Vol. 25, No. 9, Seiten 574-576, ist eine Wellenlängenstabilisierung bekannt, bei der den Trägersignalen niederfrequente Signale mittels Frequenzmodulation aufmoduliert werden. Mittels eines optischen Ringresonators werden die einzelnen Trägersignale aus dem optischen Gesamtsignal wiedergewonnen. Die Wellenlängenregelung für die einzelnen Trägersignale erfolgt durch die Auswertung der durch aufmodulierte niederfrequente Signale verursachten Frequenzverschiebung des Trägersignals. Dazu wird das optische Signal am Ausgang des Ringresonators in ein elektrisches Signal gewandelt und die darin enthaltenen niederfrequenten Signale werden durch Demodulation zurückgewonnen.

In dem Aufsatz "WDM COHERENT STAR NETWORK WITH ABSOLUTE FREQUENZY REFERENCE" von Y.C. Chung at al, erschienen in ELECTRONICS LETTERS, 13^{th} October 1988, Vol. 24, No. 21, Seiten 1313-1314, wird eine Wellenlängenstabilisierung mittels einer Referenzlaserlichtquelle beschrieben.

Die bekannten Wellenlängenstabilisierungen weisen aber den Nachteil auf, daß zur Gewinnung der für die Wellenlängenstabilisierung benötigten Regelsignale der einzelnen optischen Trägersignale ein großer Aufwand betrieben werden muß, da zusätzliche optische Bauteile benötigt werden. Für die erste bekannte Wellenlängenstabilisierung ist ein optischer Frequenzdiskriminator, für die zweite bekannte Wellenlängenstabilisierung ein Referenzlaser nötig. Derartige optische Bauteile verursachen zusätzliche Kosten.

Der Erfindung liegt deshalb die Aufgabe zugrunde, ein Verfahren und eine Anordnung zur Wellenlängenstabilisierung für mehrkanalige optische Übertragungssysteme, bei denen für jeden Kanal ein Sender mit einer Laserlichtquelle vorhanden ist, die ein optisches Trägersignal mit einer für den jeweiligen Kanal vorgegebenen Wellenlänge erzeugt, anzugeben, bei denen die Nachteile des bekannten Stands der Technik vermieden werden. Insbesondere soll eine Wellenlängenregelung mit verringertem Aufwand ermöglicht werden.

Hinsichtlich des Verfahrens zur Wellenlängenstabilisierung wird diese Aufgabe durch die Merkmale des Anspruchs 1 gelöst.

Hinsichtlich der Anordnung zur Wellenlängenstabilisierung wird diese Aufgabe durch die Merkmale des Anspruchs 3 gelöst.

Gemäß der Erfindung wird eine Wellenlängenstabilisierung der einzelnen optischen Trägersignale dadurch ermöglicht, daß den optischen Trägersignalen der einzelnen Kanäle ein bestimmtes niederfrequentes Signal mittels Frequenz- und/oder Amplitudenmodulation aufgeprägt wird und die Signale der einzelnen Kanäle des optischen Übertragungssystems mittels eines wellenlängenselektiven optischen Multiplexers zu einem optischen Gesamtsignal zusammengefaßt werden. Zur Aufprägung des niederfrequenten Signals auf das optische Trägersignal wird der Laserinjektionsstrom geringfügig (<1%) moduliert. Durch Änderung des Injektionsstroms entsteht sowohl eine Frequenz- als auch eine Amplitudenmodulation des optischen Trägersignals. Beide Molulationsarten können für die Regelung der Wellenlängenstabilisierung ausgewertet werden. Zur Auswertung wird das optische Gesamtsignal in ein elektrisches Signal gewandelt und die niederfrequenten Signale der einzelnen Kanäle werden zurückgewonnen. Durch Auswertung der Amplituden der einzelnen niederfrequenten Signale ist die Wellenlängenstabilisierung der einzelnen Trägersignale möglich.

Die Erfindung geht dabei von der Überlegung aus, daß sich durch die Verwendung des wellenlängenselektiven optischen Multiplexers, der bei mehrkanaligen optischen Übertragungssystemen mit einer größeren Kanalzahl in der Regel ohnehin zur Bildung des optischen Geamtsignals verwendet wird, eine Veränderung der Amplitude des optischen Trägersignals für die Kanäle ergibt, deren Trägersignal eine Abweichung von der Sollwellenlänge aufweist. Voraussetzung dafür ist die Verwendung von wellenlängenselektiven Multiplexern mit einem eindeutigen Maximum oder einem lokalen Minimum in Kanalmitte, wie z. B. bei Phased Arrays. Durch die Amplitudenmodulation der einzelnen Trägersignale mit unterschiedlichen niederfrequenten Signalen wird zudem die niederfrequente elektrische Auswertung der Amplitudenänderung durch eine Wellenlängenabweichung möglich, die sich auch auf die niederfrequenten Signale auswirkt.

Der Vorteil der Erfindung liegt insbesondere darin, daß für die Realisierung der Wellenlängenstabilisierung keine aufwendigen und teueren optischen Bauteile wie Frequenzdiskriminator oder Referenzlaser benötigt werden. Außerdem wird durch die Verwendung niederfrequenter Signale zur Ermittlung der Frequenzabweichung der optischen Signale eine einfache elektrische Auswertung ermöglicht.

Weitere Vorteile der Erfindung ergeben sich aus den abhängigen Ansprüchen und der nachfolgenden Beschreibung anhand von Figuren.
Es zeigen:
- Fig. 1: ein Blockschaltbild einer erfindungsgemäßen Anordnung zur Wellenlängenstabilisierung für ein mehrkanaliges optisches Übertragungssystem, und
- Fig. 2: die Transmissionscharakteristik eines wellenlängenselektiven Multiplexers.

Die Figuren stellen nur die für das Verständnis der vorliegenden Erfindung notwendigen Bestandteile des optischen Übertragungssystems dar. Insbesondere fehlen die zur Signalverarbeitung benötigten Bestandteile der Sender sowie die Empfänger am Ende der Übertragungsstrecke des optischen Übertragungssystems. Optische Signalleitungen sind mittels dicker Strichstärke, elektrische Signalleitungen mittels dünner Strichstärke dargestellt.

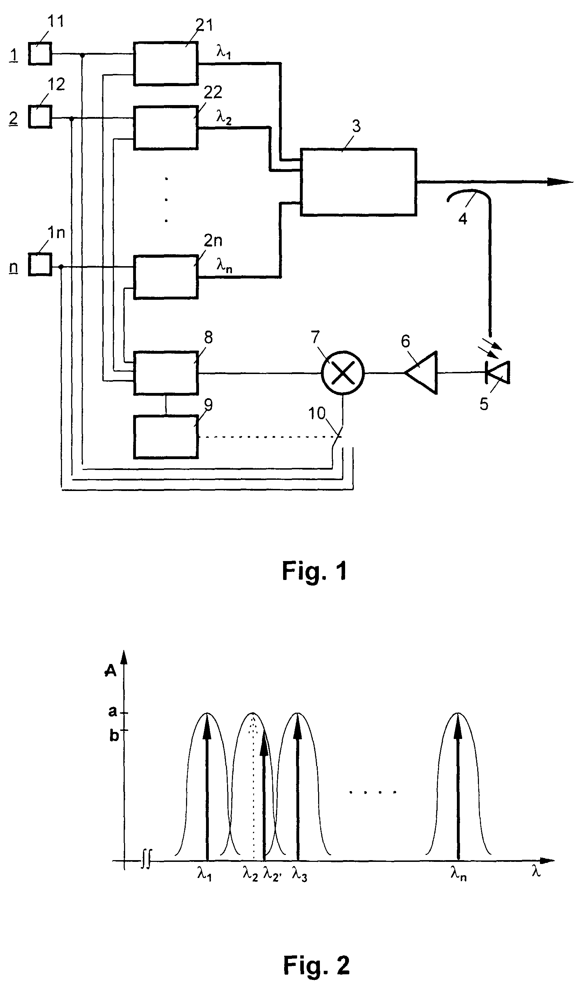

In Fig. 1 ist ein optisches Mehrkanalübertragungssystem mit Kanälen 1 bis n dargestellt. Im einzelnen sind drei Einrichtungen 11 bis 1n zur Erzeugung niederfrequenter Signale, drei optische Sender 21 bis 2n, ein wellenlängenselektiver optischer Multiplexer 3, ein optischer Koppler 4, ein Photodetektor 5, ein Verstärker 6, ein Mischer 7, eine Einrichtung zur Bestimmung einer Amplitude 8, eine Steuereinrichtung 9 und ein Schalter 10 vorhanden. Ein Kanal 1 bis n wird von jeweils einer Einrichtung 11 bis 1n und jeweils einem Sender 21 bis 2n gebildet.

Die Sender 21 bis 2n enthalten je eine Laserlichtquelle, beispielsweise eine Laserdiode, die optische Trägersignale mit bestimmten Wellenlängen ₁ bis ₙ erzeugen. Die optischen Trägersignale ₁ bis ₙ, denen in den Sendern 21 bis 2n die zu übertragende Information aufmoduliert wird, werden vom wellenlängenselektiven optischen Multiplexer 3, der beispielsweise von einem Phased Array gebildet werden kann, zu einem optischen Gesamtsignal zusammengefaßt und in die zur Übertragung verwendete optische Faser eingespeist. Das optische Gesamtsignal passiert den optischen Koppler 4, der einen Teil der Signalenergie des optischen Gesamtsignals auskoppelt und an den Photodetektor 5, der beispielsweise von einer Photodiode gebildet werden kann, weiterleitet. Im Photodetektor 5 wird das optische Gesamtsignal in ein elektrisches Gesamtsignal gewandelt, das zur Regelung der Wellenlängenstabilisierung verwendet wird.

Durch die Veränderung der Wellenlänge eines oder mehrerer optischer Trägersignale verringert sich, wie in Figur 2 für das Trägersignal λ₂ dargestellt, die Amplitude A des Trägersignals ₂, dessen Wellenlänge eine Abweichung _{2'} aufweist, vom Sollwert a hin zu einem niedrigeren Wert b. Die Verringerung der Amplitude wird durch die Filterwirkung des wellenlängenselektiven optischen Multiplexers 3 bewirkt. Wegen der Verringerung der Amplitude nimmt insgesamt auch die Leistung des optischen Gesamtsignals - und damit auch des elektrischen Gesamtsignals - ab. Da nach dem optischen Koppler 4 bzw. dem Photodetektor 5 nur das Gesamtsignal zur Verfügung steht, kann die feststellbare Leistungsänderung des Gesamtsignals aber nicht für die Regelung der Wellenlängenstabilisierung der einzelnen optischen Trägersignale verwendet werden.

Zur Gewinnung einer Größe, die eine Auskunft über die Wellenlänge der einzelnen im optischen Gesamtsignal enthaltenen optischen Trägersignale ermöglicht, wird den einzelnen optischen Trägersignalen bei ihrer Erzeugung mittels der in den Sendern 21 bis 2n enthaltenen Laserdioden ein niederfrequentes Signal durch Frequenz- und/oder Amplitudenmodulation aufmoduliert. Dafür sind die Einrichtungen 11 bis 1n vorhanden, die beispielsweise von Schwingkreisen gebildet werden können, um niederfrequente elektrische Signale zu erzeugen, die für jeden Kanal 1 bis n bzw. jede optische Trägerfrequenz unterschiedlich sind. Die niederfrequenten Signale können beispielsweise zur Modulation des Bias-Stroms der Laserdioden benutzt werden, wodurch die gewünschte Frequenz- und/oder Amplitudenmodulation der optischen Trägersignale mit den niederfrequenten Signalen erreicht wird. Die beschriebenen niederfrequenten Signale sind entsprechend auch im elektrischen Gesamtsignal enthalten, das von der Photodiode 5 erzeugt wird.

Zur weiteren Verarbeitung des von der Photodiode stammenden elektrischen Gesamtsignals wird dieses vom Verstärker 6 verstärkt und einem Mischer 7 zugeführt. An den zweiten Eingang des Mischers 7 werden, gesteuert durch die Steuereinrichtung 9, die beispielsweise von einem Taktgenerator gebildet werden kann, über den Schalter 10 die niederfrequenten Signale der Einrichtungen 11 bis 1n gelegt. Durch die Mischung des elektrischen Gesamtsignals mit den niederfrequenten Signalen werden die im elektrischen Gesamtsignal enthaltenen amplitudenmodulierten niederfrequenten Signale entsprechend des ausgewählten Kanals 1 bis n herausgefiltert, bzw. demoduliert. Das entsprechende niederfrequente Signal wird der Einrichtung zur Bestimmung einer Amplitude 8 zugeführt, die beispielsweise von einem Sample and Hold Glied gebildet werden kann. Einrichtung 8 wird zur Synchronisation wie der Schalter 10 von der Steuereinrichtung 9 gesteuert. Damit wird sichergestellt, daß die von der Einrichtung 8 ermittelten Amplitudenwerte der demodulierten niederfrequenten Signale, die an die optischen Sender 21 bis 2n geleitet werden, jeweils dem zugehörigen Kanal 1 bis n zugeordnet werden.

Die derart ermittelten Amplitudenwerte werden in den Sendern dazu benutzt, die für die Wellenlängenstabilisierung nötige Regelung vorzunehmen. Dazu kann beispielsweise eine Regelung der Wellenlänge des durch die Laserdiode erzeugten Lichts durch die Veränderung der Temperatur der Laserdiode vorgenommen werden. Dadurch wird eine elektrische Signalverarbeitung ermöglicht, die bei einer niedrigen Frequenz arbeiten kann.

In der ersten Ausführung der beschriebenen Wellenlängenstabilisierung ist es vorgesehen, daß bei der Feststellung der Abweichung einer der aus dem elektrischen Gesamtsignal ermittelten Amplitudenwerte der niederfrequenten Signale, zuerst eine Regelung der Wellenlänge in eine beliebige Richtung erfolgen kann. Es kann beispielsweise zuerst eine Vergrößerung der Wellenlänge des betreffenden optischen Trägersignal vorgenommen werden. Verringert sich die Abweichung des ermittelten Amplitudenwerts, wird der Regelvorgang fortgesetzt, bis die Sollamplitude und damit die Sollwellenlänge des betreffenden optischen Trägersignals erreicht wird. Vergrößert sich die Abweichung des ermittelten Amplitudenwerts, wird der Regelsinn geändert, d. h. es wird eine Verkleinerung der Wellenlänge vorgenommen, bis die Sollamplitude und damit die Sollwellenlänge des betreffenden Trägersignals erreicht ist.

In einer anderen Ausführungsform ist es vorgesehen, den Regelsinn zu bestimmen, um bei einer festgestellten Abweichung der Wellenlänge eines optischen Trägersignals sofort eine Regelung folgen zu lassen, die richtig gerichtet ist. Dazu kann die bei der Amplitudenmodulation mit dem niederfrequenten Signal entstehende, überlagerte Frequenzmodulation der Laserdiode ausgewertet werden. Dabei kommt es zu einem Vorzeichenwechsel abhängig davon, ob sich das Signal an der Filterflanke bei Wellenlängen kleiner bzw. größer der Sollwellenlänge befindet.

Eine weitere Methode zur Bestimmung des Regelsinns besteht darin, über die Temperatur des wellenlängenselektiven Multiplexers dessen Mittenfrequenzen mittels der niederfrequenten Signale zu verstimmen. Dies führt ebenfalls zu einer Amplitudenmodulation des demodulierten Signals. Diese ist davon abhängig, ob das Trägersignal zur unteren bzw. oberen Filterflanke verschoben ist, d. h. ob die Wellenlänge des Trägersignals kleiner bzw. größer als die Sollwellenlänge ist.

Zur Bestimmung des Regelsinns können außerdem auch spektrale Anteile höherer Ordnung der niederfrequenten Signale verwendet werden, die durch die Wellenlängenveränderungen des optischen Trägersignals entstehen.

Statt eine Steuereinrichtung 9 und einen Schalter 10 vorzusehen, die dazu dienen, jedem Kanal 1 bis n seine im Gesamtsignal enthaltenen Amplitudenwerte der niederfrequenten Signale zuzuordnen, können auch für jeden Kanal Einrichtungen 8 und Mischer 7 vorgesehen werden. An jeden Mischer wird dann eines der niederfrequenten Signale 11 bis 1n direkt angeschlossen.

## Patentansprüche

1. Verfahren zur Wellenlängenstabilisierung für mehrkanalige optische Übertragungssysteme, bei denen für jeden Kanal ein Sender mit einer Laserlichtquelle vorhanden ist, die ein optisches Trägersignal mit einer für den jeweiligen Kanal vorgegebenen Wellenlänge erzeugt, bei dem
- den optischen Trägersignalen der einzelnen Kanäle in den Laserlichtquellen unterschiedliche, niederfrequente Signale mittels Amplitudenmodulation aufgeprägt werden, deren Frequenz für jeden Kanal vorgegeben ist,
- die optischen Signale der einzelnen Kanäle mittels eines wellenlängenselektiven optischen Multiplexers zu einem optischen Gesamtsignal zusammengefaßt werden,
- das optische Gesamtsignal in ein elektrisches Gesamtsignal gewandelt wird,
- aus dem elektrischen Gesamtsignal die jeweiligen niederfrequenten Signale eines jeden Kanals isoliert und ihre Amplituden bestimmt werden, und
- nach Maßgabe der Amplituden der niederfrequenten Signale für den jeweiligen Kanal die Wellenlänge des optischen Trägersignals bei der Erzeugung durch die Laserlichtquelle des jeweiligen Kanals gesteuert wird.

2. Verfahren nach Anspruch 1,
**dadurch gekennzeichnet**,
daß aus der der Amplitudenmodulation mit den niederfrequenten Signalen überlagerten Frequenzmodulation der optischen Trägersignale ein Regelsinn für die Steuerung der Erzeugung der Wellenlänge für den jeweiligen Kanal abgeleitet wird.

3. Anordnung zur Wellenlängenstabilisierung für mehrkanalige optische Übertragungssysteme, bei der für jeden Kanal (1 bis n) ein Sender (21 bis 2n) mit einer Laserlichtquelle vorhanden ist, die ein optisches Trägersignal (₁ bis λ₂) mit einer für den jeweiligen Kanal (1 bis n) vorgegebenen Wellenlänge erzeugt, bei der
- jeder Kanal (1 bis n) eine erste Einrichtung (11 bis 1n) aufweist, die ein niederfrequentes Signal erzeugt, welches in der Laserlichtquelle dem optischen Trägersignal (₁ bis ₂) mittels Amplitudenmodulation überlagert wird, wobei die niederfrequenten Signale für jeden Kanal (1 bis n) unterschiedlich sind,
- ein wellenlängenselektiver optischer Multiplexer (3) vorhanden ist, der die optischen Signale der einzelnen Kanäle (1 bis n) zu einem optischen Gesamtsignal zusammenfaßt,
- ein Photodetektor (4) vorhanden ist, der das optische Gesamtsignal in ein elektrisches Gesamtsignal wandelt,
- ein oder mehrere Mischer (7) das elektrische Gesamtsignal mit den niederfrequenten Signalen der ersten Einrichtungen (11 bis 1n) mischen, wodurch die im elektrischen Gesamtsignal enthaltenen niederfrequenten Signale eines jeden Kanals (1 bis n) demoduliert werden,
- eine oder mehrere Einrichtungen (8) vorhanden sind, die die Amplitude der demodulierten niederfrequenten Signale bestimmen, und
- die Laserlichtquellen in Abhängigkeit von der Amplitude der demodulierten niederfrequenten Signale die Wellenlänge des jeweiligen Kanals (1 bis n) regeln.

4. Anordnung nach Anspruch 3,
**dadurch gekennzeichnet**,
daß die Laserlichtquelle eine Laserdiode ist.

5. Anordnung nach Anspruch 3 oder 4,
**dadurch gekennzeichnet**,
daß der Photodetektor (5) eine Photodiode ist.

6. Anordnung nach einem der Ansprüche 3 bis 5,
**dadurch gekennzeichnet**,
daß zur Amplitudenmodulation der optischen Trägersignale (₁ bis λ₂) Einrichtungen zur Modulation des Bias-Stroms der Laserlichtquellen mit den niederfrequenten Signalen vorhanden sind.

7. Anordnung nach einem der Ansprüche 3 bis 6,
**dadurch gekennzeichnet**,
daß zur Regelung der Wellenlänge der Laserlichtquelle des jeweiligen Kanals (1 bis n) Einrichtungen zur Änderung der Temperatur der Laserlichtquellen vorhanden sind.

8. Anordnung nach einem der Ansprüche 3 bis 7,
**dadurch gekennzeichnet**,
daß eine Einrichtung zur Frequenzdemodulation vorgesehen ist, die eine der Amplitudenmodulation mit den niederfrequenten Signalen überlagerte Frequenzmodulation der optischen Trägersignale demoduliert, und daß die Laserlichtquellen mittels des Ausgangssignals des Frequenzdemodulators einen Regelsinn für die Steuerung der Erzeugung der Wellenlänge für den jeweiligen Kanal ableiten.
